# FASCICULE DE BREVET EUROPEEN

(11) **EP 0 669 695 B1**
(45) Date de publication et mention de la délivrance du brevet: **30.07.1997**
(21) Numéro de dépôt: 95102070.0
(22) Date de dépôt: 15.02.1995
(51) Int. Cl.: H02K 5/14, H02K 19/36

(54) **Ensemble perfectionné d'alimentation et de commande, pour un alternateur de véhicule automobile**
Verbesserte Speise- und Steuereinheit für einen Wechselstromgenerator eines Fahrzeugs
Advanced supply and control assembly for an alternator of a vehicle

(30) Priorité: 28.02.1994 FR 9402243
(43) Date de publication de la demande: 30.08.1995
(73) Titulaire: VALEO EQUIPEMENTS ELECTRIQUES MOTEUR, 94000 Créteil (FR)
(72) Inventeur: Abadia, Roger, F-93360 Neuilly-Plaisance (FR)
(74) Mandataire: Gamonal, Didier

(56) Documents cités:
- EP-A- 0 484 287
- FR-A- 2 514 962

## Description

La présente invention concerne un ensemble perfectionné d'alimentation et de commande pour un alternateur, équipant notamment un véhicule automobile.

L'invention concerne plus particulièrement un ensemble d'alimentation du type comportant une plaque-support en matériau isolant destinée à être fixée à une partie fixe de l'alternateur, et un porte-balais, dans lequel la plaque-support porte, sur une première face, un circuit intégré de régulation de la tension fournie par l'alternateur dont des branches de raccordement électrique s'étendent à travers le matériau de la plaque-support pour déboucher dans un logement formé dans la seconde face de la plaque-support, et du type comportant un circuit de raccordement électrique qui comprend des pattes de raccordement en contact avec les broches de raccordement du circuit intégré.

Dans la conception d'un tel type d'ensemble d'alimentation et de commande pour un alternateur de véhicule automobile, il est nécessaire de pouvoir disposer du plus grand nombre possible de fonctions électriques, qui sont commandées par le circuit intégré, et il est donc nécessaire que le circuit intégré possède un grand nombre de broches de raccordement dont on doit assurer le raccordement électrique fiable avec les pattes de raccordement du circuit de raccordement électrique de l'ensemble.

Dans les conceptions connues, telle que par exemple celle décrite et représentée dans le document EP-A-0.484.287, le circuit intégré ne comporte que peu de branches de raccordement qui sont difficiles à relier électriquement, par exemple par soudage, au circuit de raccordement électrique et ceci notamment du fait du peu de place disponible pour ces opérations.

Afin de remédier à ces inconvénients, l'invention propose un ensemble du type mentionné précédemment, caractérisé en ce que les broches de raccordement du circuit intégré sont agencées sur un cercle.

Selon d'autres caractéristiques de l'invention :
- les broches de raccordement sont réparties angulairement de manière régulière ;
- les broches de raccordement font saillie partiellement hors du logement, au-delà de la seconde face de la plaque-support ;
- le logement comporte une paroi latérale de forme générale cylindrique ;
- chacune des pattes de raccordement s'étend axialement le long d'une des broches de raccordement correspondant ;
- l'une des extrémités de chaque patte de raccordement se prolonge par une branche de liaison repliée à angle droit qui s'étend dans le logement depuis la paroi latérale du logement ;
- le circuit de raccordement comporte un flan métallique de raccordement, partiellement noyé dans le matériau isolant de la plaque-support, et les pattes de raccordement sont constituées par des parties, non-recouvertes de matériau isolant et pliées, du flan métallique ;
- l'ensemble comporte un couvercle, en matériau isolant en forme générale de plaque destiné à recouvrir la seconde face de la plaque-support ;
- la face inférieure du couvercle agencée en regard de la seconde face de la plaque-support, comporte une série de cloisons en matériau isolant, réalisées venues de matière par moulage avec le couvercle, qui s'étendent en saillie à l'intérieur du logement formé dans la seconde face de la plaque-support, entre les broches de raccordement du circuit intégré.

D'autres caractéristiques et avantages de l'invention apparaîtront à la lecture de la description détaillée qui va suivre pour la compréhension de laquelle on se reportera aux dessins annexés dans lesquels :

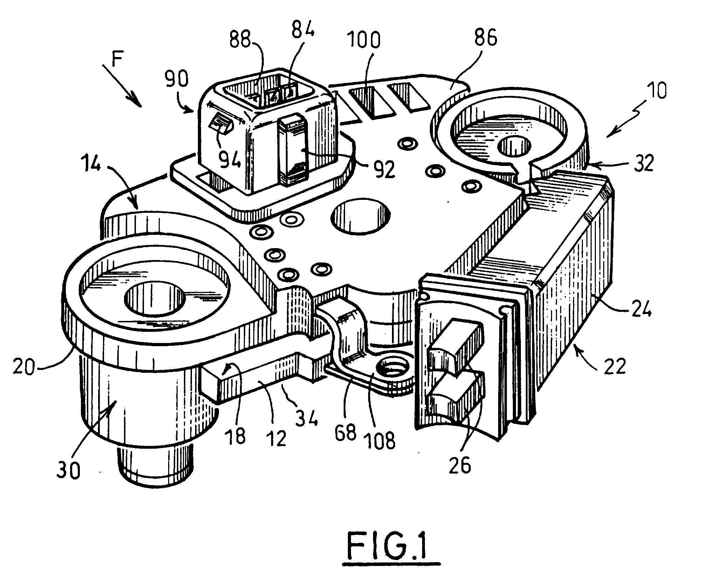

- La figure 1 est une vue générale en perspective d'un exemple de réalisation d'un ensemble d'alimentation et de commande pour un alternateur de véhicule automobile, réalisé conformément aux enseignements de l'invention ;
- la figure 2 est une vue de dessus de la plaque-support de l'ensemble illustré sur la figure 1 ;
- la figure 3 est une vue en section transversale selon la ligne 3-3 de la figure 2 ;
- la figure 4 est une vue, à plus grande échelle, de la face inférieure du couvercle de l'ensemble illustré sur la figure 1;
- la figure 5 est une vue latérale en élévation, à plus petite échelle, de l'ensemble illustré sur la figure 1, selon la flèche F de cette figure ;
- la figure 6 est une vue de dessous, similaire à celle de la figure 4, du flan métallique de branchement appartenant au couvercle de l'ensemble illustré à la figure 4 ;
- la figure 7 est une vue de détail en perspective du flan métallique de branchement illustré sur la figure 6 ; et
- la figure 8 est une vue de dessus, à plus grande échelle, du flan métallique de raccordement appartenant à la plaque-support illustrée aux figures 2 et 3.

L'ensemble 10 illustré sur les figures est constitué pour l'essentiel par une plaque-support inférieure 12 et par un couvercle supérieur en forme de plaque 14.

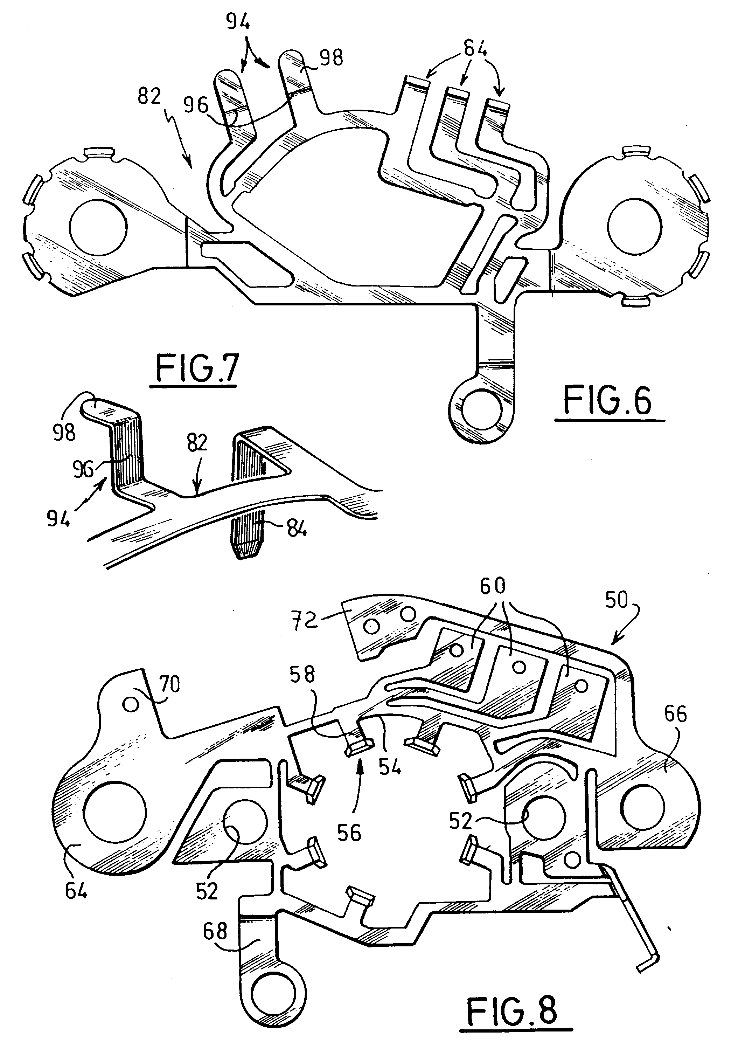

La plaque-support 12 est constituée pour l'essentiel par une plaque en matériau isolant 16 dont la face supérieure sensiblement plane 18 constitue le plan de joint avec la face inférieure 20 du couvercle 14 (voir figure 5).

L'ensemble 10 comporte également un dispositif porte-balais 22 qui est constitué pour l'essentiel par un corps en matériau isolant 24 qui est réalisé venu de matière par moulage avec la plaque-support inférieure 12.

L'ensemble porte-balais 24, d'une conception connue, comporte notamment deux balais ou charbons 26 destinés à coopérer avec des pistes conductrices (non représentées) de l'arbre du rotor de l'alternateur.

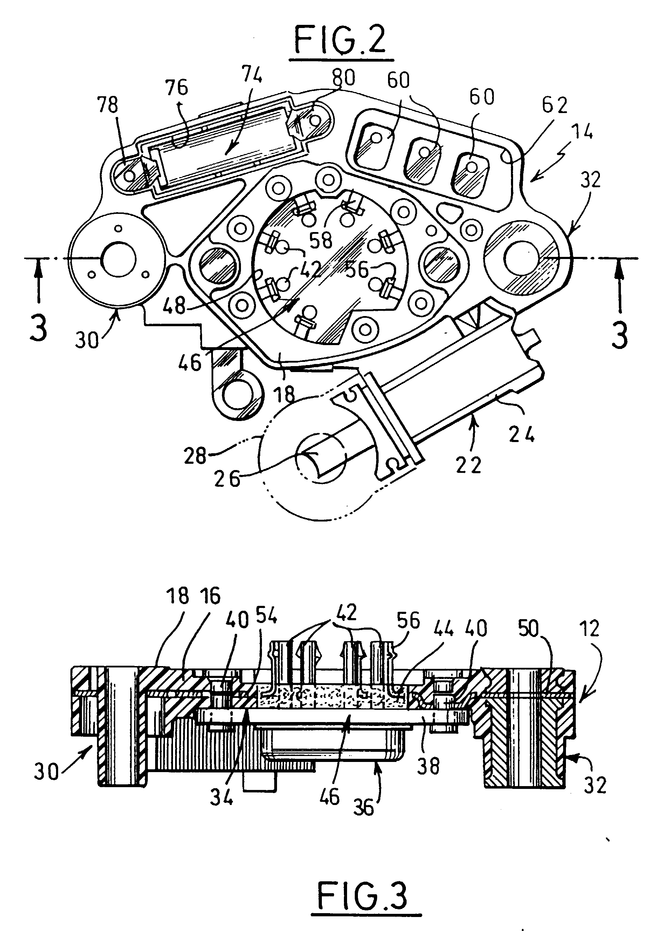

Avant son montage sur l'alternateur, le porte-balais 22 peut comporter un capuchon amovible 28 (illustré en silhouette sur la figure 2) qui protège les charbons 26.

Le corps 16 en forme de plaque de la plaque-support 12 comporte deux prolongements en forme de douilles 30 et 32 servant notamment à la fixation de l'ensemble 10 et au raccordement électrique de ce dernier avec la masse du corps de l'alternateur.

La plaque-support 12 porte également, sur sa face inférieure 34, un circuit intégré désigné par la référence générale 36 dont la platine de support 38 comporte deux plots de fixation 40 qui sont partiellement noyés dans le matériau isolant de la plaque 16.

Le circuit intégré 36 comporte une série de sept broches de raccordement 42 qui s'étendent verticalement vers le haut depuis la face supérieure 44 de la platine 38 tournée vers la face inférieure 34 de la plaque 16 et qui traverse le matériau isolant pour déboucher dans un logement 46 formé en creux dans la face supérieure 18 de la plaque 16.

Le logement 46 présente une paroi périphérique cylindrique 48 et les sept broches de raccordement 42 sont agencées régulièrement en cercle à l'intérieur du logement 46 radialement vers l'intérieur par rapport à la paroi latérale 48.

Comme on peut le voir notamment sur la figure 3, les broches de raccordement 42 font saillie axialement hors du logement 46 au-delà de la face supérieure 18 du corps 16 de la plaque-support 12.

Le raccordement électrique des broches de raccordement 42 au porte-balais 22 et à l'extérieur est assuré au moyen d'un flan métallique de raccordement 50, illustré en détail sur la figure 8, qui est un flan en tôle métallique découpée et pliée.

Le flan 50 est partiellement noyé dans la matière plastique isolante constitutive du corps 16 de la plaque-support 12, lors de l'opération de moulage de cette dernière.

Il comporte notamment des orifices 52 pour le passage des plots 40 du circuit intégré 36 et une ouverture centrale principale 54 qui s'étend autour du logement 46.

Le flan métallique de raccordement électrique 50 comporte une série de sept pattes de raccordement 56 dont chacune s'étend verticalement le long d'une broche de raccordement 42 correspondante (voir figures 2 et 3).

A cet effet, chaque patte de raccordement 56 est reliée au bord de l'ouverture 54 par une patte de liaison 58 qui s'étend dans le plan général du flan de raccordement électrique 50 et qui se prolonge par la patte de raccordement 56 proprement dite qui s'étend verticalement à angle droit par rapport au plan du flan de raccordement 50.

L'extrémité libre de chacune des pattes 56 est prévue pour être soudée à la portion en vis-à-vis de l'extrémité libre d'une broche correspondante de raccordement 42 du circuit intégré 36.

Les pattes de raccordement 56 peuvent être dimensionnées et conformées de manière à être légèrement en appui élastique contre les broches de raccordement correspondantes 42, avant l'opération de soudage, et ceci de façon à assurer un meilleur contact électrique.

Le flan de raccordement électrique 50 comporte également, dans ce mode de réalisation, trois zones coplanaires de contact électrique 60 qui, comme on peut le voir sur la figure 2, ne sont pas recouvertes par la matière isolante constitutive du corps 16 de la plaque-support 12 et qui sont agencées dans une fenêtre 62 formée à cet effet dans la face supérieure 18 de la plaque-support (voir figure 2).

Le flan de raccordement électrique 50 comporte deux rondelles de raccordement 64 et 66 pour permettre le passage des éléments de fixation de l'ensemble 10 à travers les douilles 30 et 32 avec un contact électrique de masse.

Enfin, le flan de raccordement électrique 50 comporte une borne extérieure 68 et deux pattes de raccordement opposées 70 et 72 qui sont coplanaires et non revêtues de matériau isolant.

Les pattes 70 et 72 ont pour but de permettre le raccordement électrique d'un condensateur 74 qui est reçu dans un réceptacle 76 réalisé venu de matière avec le corps 16 de la plaque-support 12 en matériau isolant moulé, qui débouche dans la face supérieure 18 de cette dernière et qui s'étend verticalement vers le bas.

Le condensateur 74, qui est de forme générale parallélépipédique rectangle complémentaire de celle du réceptacle 76 comporte deux pattes de raccordement électrique 78 et 80 qui sont prévues pour venir en contact électrique avec les zones de raccordement 70 et 72 du flan de raccordement électrique 50 lorsque le condensateur est en place dans le réceptacle 76.

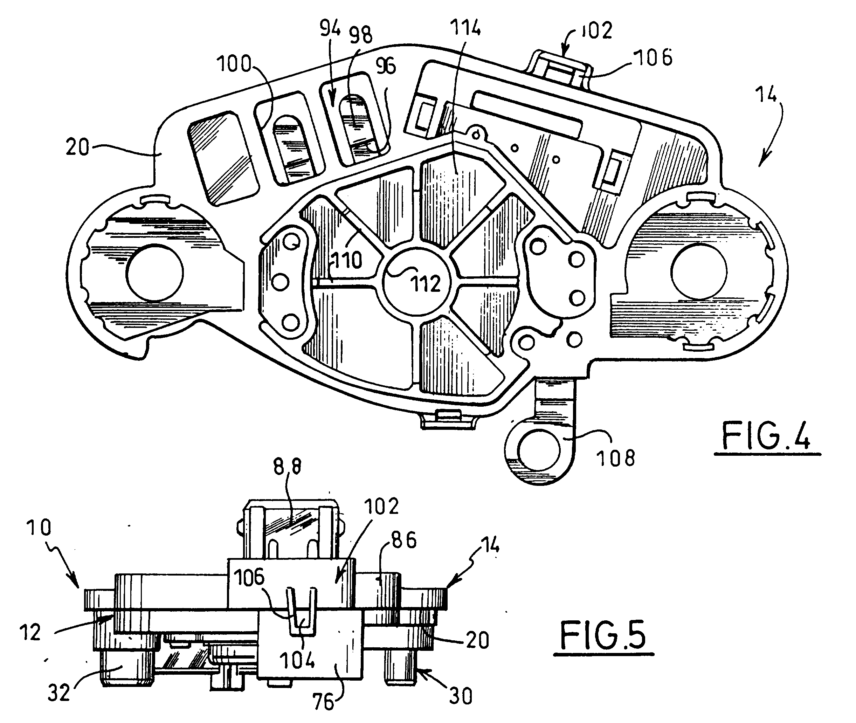

Le couvercle 14, qui est notamment illustré sur la figure 4, est un élément en forme générale de plaque moulée en matériau isolant de l'électricité.

La matière isolante du couvercle 14 est surmoulée sur un flan de branchement électrique 82, qui est illustré en détail sur la figure 6, qui est réalisé en tôle découpée et pliée.

Le flan de branchement électrique 82 comporte trois bornes de branchement 84 qui sont agencées à la périphérie du flan de branchement électrique 82 et qui s'étendent verticalement à angle droit par rapport au plan général du flan de branchement électrique 82 et vers le haut au-delà de la face supérieure 86 du couvercle 14.

Ces pattes de branchement 84 s'étendent à l'intérieur d'un boîtier en matériau isolant 88 réalisé venu de matière par moulage avec le corps en matériau isolant du couvercle 14 pour constituer une prise de branchement 90 de l'ensemble 10.

Le corps en matériau isolant 88 de la prise 90 peut comporter, sur sa paroi périphérique externe, des moyens de guidage 92 et de blocage 94 destinés à coopérer avec une fiche femelle correspondante (non représentée) appartenant à un faisceau de câblage électrique du véhicule automobile.

Dans le mode de réalisation illustré sur les figures, la prise 90 est une prise droite qui s'étend axialement au-delà de la face supérieure 86, c'est-à-dire selon une direction sensiblement parallèle aux broches de raccordement électrique 42 du circuit intégré 36 et parallèle à l'axe de rotation de l'alternateur (non représenté).

Le flan de branchement électrique 82 comporte également, dans ce mode de réalisation, deux pattes 94 de liaison électrique dont chacune est constituée par une branche verticale 96 qui s'étend verticalement vers le bas, c'est-à-dire à l'opposé des bornes de branchement électrique 84, et dont chacune se termine par une extrémité 98 repliée à 90° qui s'étend ainsi parallèlement au plan général du flan de branchement électrique 82.

Comme on peut le voir notamment sur la figure 4, les pattes 94 de liaison électrique s'étendent chacune dans une fenêtre 100 formée dans le corps en matériau isolant du couvercle 14.

Les pattes 94 de liaison électrique sont espacées l'une de l'autre de manière à pouvoir venir en vis-à-vis des zones 60 de raccordement électrique du flan de raccordement électrique 50 et en contact électrique avec celle-ci lorsque le couvercle est en position fixée sur la plaque-support 12.

Le maintien en position du couvercle 14 sur la plaque-support 12 est par exemple assuré par un dispositif d'accrochage 102 réalisé venu de matière par moulage respectivement avec le corps 16 de la plaque-support 12, sous la forme d'un ergot 104 et, respectivement, avec le corps du couvercle 14 sous la forme d'une patte d'accrochage 106 en U (voir figure 5).

Selon les différents modèles d'ensembles 10, il est possible de prévoir une, deux ou trois pattes 94 qui viennent en contact avec les zones 60 du circuit de raccordement électrique constitué par le flan métallique 50.

Le circuit de branchement électrique constitué par le flan métallique 82 comporte également une borne extérieure coudée 108 qui vient coopérer électriquement avec la borne extérieure plate 68 du flan de raccordement électrique 50.

La conception selon l'invention de l'ensemble 10 permet d'utiliser un circuit intégré comportant un grand nombre de broches de raccordement électrique 42 qui sont agencées de manière avantageuse en cercle et de manière régulière pour faciliter leur raccordement électrique avec les pattes 56 et leur soudage.

Avant l'assemblage du couvercle 14 sur la plaque-support 12, il est possible de souder électriquement par résistance les pattes de liaison 94 sur les zones 60 ainsi que les bornes extérieures 68 et 108.

Les fenêtres 100 peuvent, après ces opérations de soudage par résistance, être recouvertes par un mastic en matériau isolant de l'électricité.

La conception en deux parties de l'ensemble 10 permet également d'assurer un très bon isolement électrique entre les différentes broches de raccordement 42 du circuit intégré.

A cet effet, et comme on peut le voir sur la figure 4, la face inférieure 20 du couvercle 14 comporte une série de sept cloisons d'isolation électrique 110 qui sont réalisées venues de matière par moulage avec le corps en matériau isolant du couvercle 14.

Les cloisons 110 font saillie verticalement depuis la face inférieure 20 du couvercle 14 pour s'étendre entre les broches de raccordement 42 et partiellement à l'intérieur du logement 46.

Les cloisons isolantes 110 sont agencées radialement autour d'un noyau tubulaire 112 qui accroît la rigidité de l'ensemble et délimite avec les cloisons 110 des logements 114 dont la paroi latérale continue de chacun est réalisée en matériau isolant et dont chacun reçoit une broche de raccordement électrique 42 et une patte de raccordement électrique associée 56.

## Revendications

1. Ensemble (10) d'alimentation et de commande pour un alternateur de véhicule automobile, du type comportant une plaque-support (12) en matériau isolant destinée à être fixée à une partie fixe de l'alternateur et un porte-balais (22), et du type dans lequel la plaque-support (12) porte sur une première face (34) un circuit intégré (36) de régulation de la tension fournie par l'alternateur dont des broches (42) de raccordement électrique s'étendent à travers le matériau (18) de la plaque-support (12) pour déboucher dans un logement (46) formé dans la seconde face (18) de la plaque-support (12), et du type comportant un circuit (50) de raccordement électrique qui comporte des pattes (56) de raccordement en contact avec les broches (42) de raccordement du circuit intégré (36), caractérisé en ce que les broches de raccordement (42) du circuit intégré (36) sont agencées sur un cercle.

2. Ensemble selon la revendication 1, caractérisé en ce que les broches (42) de raccordement électrique du circuit intégré (36) sont réparties angulairement de manière régulière.

3. Ensemble selon les revendications 1 ou 2, caractérisé en ce que les broches de raccordement (42) font saillie partiellement hors du logement (46), au-delà de la seconde face (18) de la plaque-support (12).

4. Ensemble selon l'une quelconque des revendications 1 à 3, caractérisé en ce que le logement (46) comporte une paroi latérale (48) de forme générale cylindrique.

5. Ensemble selon l'une quelconque des revendications précédentes, caractérisé en ce que chacune des pattes de raccordement (56) s'étend axialement le long d'une broche de raccordement (42) correspondante.

6. Ensemble selon la revendication 5, caractérisé en ce que l'une des extrémités de chaque patte de raccordement (56) se prolonge par une branche (58) de liaison repliée à angle droit qui s'étend dans le logement (46) depuis la paroi latérale (48) du logement.

7. Ensemble selon l'une quelconque des revendications précédentes, caractérisé en ce que le circuit de raccordement comporte un flan métallique de raccordement (50), partiellement noyé dans le matériau isolant de la plaque-support (18), et en ce que les pattes de raccordement (56) sont constituées par des parties, non-recouvertes de matériau isolant et pliées, du flan métallique (50).

8. Ensemble selon l'une quelconque des revendications précédentes, caractérisé en ce qu'il comporte un couvercle (14) en matériau isolant en forme générale de plaque destiné à recouvrir la seconde face (18) de la plaque-support (12).

9. Ensemble selon la revendication 8, caractérisé en ce que la face inférieure (20) du couvercle (14), agencée en regard de la seconde face (18) de la plaque-support (12), comporte une série de cloisons (110) en matériau isolant, réalisées venues de matière par moulage avec le couvercle (14), qui s'étendent en saillie à l'intérieur du logement (46) formé dans la seconde face (18) de la plaque-support (12), entre les broches (42) de raccordement du circuit intégré (36).

## Patentansprüche

1. Speise- und Steuereinheit (10) für einen Wechselstromgenerator eines Kraftfahrzeugs, in der Ausführung mit einer Tragplatte (12) aus nichtleitendem Material, die an einem ortsfesten Teil des Wechselstromgenerators zu befestigen ist, und einem Bürstenhalter (24), wobei die Tragplatte (12) auf einer ersten Fläche (34) eine integrierte Schaltung (36) zur Regelung der durch den Wechselstromgenerator gelieferten Spannung trägt, deren elektrische Verbindungsstifte (42) durch das Material (16) der Tragplatte (12) hindurchgehen, um in eine Aufnahme (46) zu münden, die in der zweiten Fläche (18) der Tragplatte (12) ausgebildet ist, und in der Ausführung mit einer elektrischen Verbindungsschaltung (50), die Verbindungsansätze (56) enthält, die mit den Verbindungsstiften (42) der integrierten Schaltung (36) in Kontakt stehen , **dadurch gekennzeichnet**, daß die Verbindungsstifte (42) der integrierten Schaltung (36) auf einem Kreis angeordnet sind.

2. Einheit nach Anspruch 1, **dadurch gekennzeichnet**, daß die elektrischen Verbindungsstifte (42) der integrierten Schaltung (36) winklig gleichmäßig verteilt sind.

3. Einheit nach den Ansprüchen 1 oder 2, **dadurch gekennzeichnet**, daß die Verbindungsstifte (42) teilweise aus der Aufnahme (46) über die zweite Fläche (18) der Tragplatte (12) hinaus vorstehen.

4. Einheit nach einem der Ansprüche 1 bis 3, **dadurch gekennzeichnet**, daß die Aufnahme (46) eine Seitenwand (48) mit einer allgemein zylindrischen Form umfaßt.

5. Einheit nach einem der vorangehenden Ansprüche, **dadurch gekennzeichnet**, daß sich jeder der Verbindungsansätze (56) axial entlang einem entsprechenden Verbindungsstift (42) erstreckt.

6. Einheit nach Anspruch 5, **dadurch gekennzeichnet**, daß eines der Enden jedes Verbindungsansatzes (56) durch einen rechtwinklig umgebogenen Verbindungsschenkel (58) verlängert wird, der sich von der Seitenwand (48) der Aufnahme aus in die Aufnahme (46) erstreckt.

7. Einheit nach einem der vorangehenden Ansprüche, **dadurck gekennzeichnet**, daß die Verbindungsschaltung eine Verbindungsscheibe aus Metall (50) umfaßt, die teilweise in das nichtleitende Material der Tragplatte (12) eingelassen ist, und daß die Verbindungsansätze (56) aus nicht mit nichtleitendem Material bedeckten und umgebogenen Teilen der Metallscheibe (50) bestehen.

8. Einheit nach einem der vorangehenden Ansprüche, **dadurck gekennzeichnet**, daß sie einen allgemein plattenförmigen Deckel (14) aus nichtleitendem Material umfaßt, der zur Abdeckung der zweiten Fläche (18) der Tragplatte (12) bestimmt ist.

9. Einheit nach Anspruch 8, **dadurch gekennzeichnet**, daß die gegenüber der zweiten Fläche (18) der Tragplatte (12) angeordnete Unterseite (20) des Deckels (14) eine Reihe von einstückig am Deckel (14) angeformten Zwischenwänden (110) aus nichtleitendem Material umfaßt, die sich vorspringend in das Innere der in die zweite Fläche (18) der Tragplatte (12) eingearbeiteten Aufnahme (46) zwischen den Verbindungsstiften (42) der integrierten Schaltung (36) erstrecken.

## Claims

1. A supply and control unit (10 ) for an alternator of a motor vehicle, of the type comprising a support plate (12) made of insulating material designed to be fixed to a fixed part of the alternator and a brush holder (22), and of the type in which the support plate (12) bears on a first face (34) an integrated circuit (36) for regulating the voltage provided by the alternator, the electric connection pins (42) of which extend through the material (18) of the support plate (12) in order to open into a housing (46) formed in the second face (18) of the support plate (12), and of the type comprising an electric connecting circuit (50) which comprises connection lugs (56) in contact with the connection pins (42) of the integrated circuit,
**characterised in that** the connection pins (42) of the integrated circuit (36) are disposed in a circle.

2. A unit according to Claim 1,
**characterised in that** the electric connection pins (42) of the integrated circuit (36) are distributed angularly in a regular manner.

3. A unit according to Claims 1 or 2,
**characterised in that** the connection pins (42) partially protrude from the housing (46), beyond the second face (18) of the support plate (12).

4. A unit according to any one of Claims 1 to 3,
**characterised in that** the housing (46) comprises a lateral wall (48) having a general cylindrical shape.

5. A unit according to any one of the preceding Claims,
**characterised in that** each of the connection lugs (56) extends axially along a corresponding connection pin (42).

6. A unit according to Claim 5,
**characterised in that** one of the end of each connection lug (56) is extended by a coupling arm (58) bent at right angles which extends in the housing (46) from the lateral wall (48) of the housing.

7. A unit according to any one of the preceding Claims,
**characterised in that** the connection circuit comprises a metal connection blank (50), partially embedded in the insulating material of the support plate (18),
and in that the connection lugs (56) are formed by parts, not covered with insulating material and bent, of the metal blank (50).

8. A unit according to any one of the preceding Claims,
**characterised in that** it comprises a generally plate-shaped cover (14) made of insulating material designed to cover the second face (18) of the support plate (12).

9. A unit according to Claim 8,
**characterised in that** the lower face (20) of the cover (14), disposed opposite the second face (18) of the support plate (12), comprises a series of partitions (110) made of insulating material, produced in one piece by moulding with the cover (14), which extend in protruding manner inside the housing (46) formed in the second face (18) of the support plate (12), between the connection pins (42) of the integrated circuit (36).
